# EUROPEAN PATENT APPLICATION

(11) **EP 4 310 330 A1**
(43) Date of publication of application: **24.01.2024**
(21) Application number: 23186411.7
(22) Date of filing: 19.07.2023
(51) Int. Cl.: F04B 35/04, F04B 39/00, F04C 18/02, F04C 23/00, H01R 13/52, H02K 5/22, F04B 39/12

(54) **SEALING STRUCTURE OF ELECTRIC COMPRESSOR, ELECTRIC COMPRESSOR AND VEHICLE**

(30) Priority: 21.07.2022 CN 202221907761 U
(71) Applicant: MAHLE International GmbH, 70376 Stuttgart (DE); MAHLE Automotive Technologies (China) Co., Ltd., Shanghai Fengxian 201401 (CN)
(72) Inventor: XU, Chao, Changshu, 215500 (CN); YUAN, Chao, Changshu, 215500 (CN)
(74) Representative: BRP Renaud & Partner mbB Rechtsanwälte Patentanwälte Steuerberater

(57) **Abstract**

Sealing structure of an electric compressor comprising an upper sealing plug (100), lower sealing plugs (200), a sheath (300) and motor terminals (400) as well as three-phase wires (700) of the motor of the electric compressor and terminals of the inverter (500) that are inserted into the sealing structure. One end of the upper sealing plug is connected to the sheath, the lower sealing plugs are at least partially inserted into the sheath, the lower sealing plugs and the sheath enclose accommodation spaces, the motor terminals are arranged in the accommodation spaces, and are connected to the motor of the electric compressor through the three-phase wires of the motor. The terminals of the inverter are inserted into the motor terminals by passing through the upper sealing plug.

Compressor comprising such a sealing structure and vehicle comprising such a compressor.

## Description

### TECHNICAL FIELD

The utility model relates to the technical field of auto parts, in particular to a sealing structure of an electric compressor, an electric compressor and a vehicle.

### BACKGROUND

With the continuous development of the new energy vehicle industry, the comfort requirement of the users to the new energy vehicles is also continuously improved. Under the requirement, the refrigeration and noise performance of the electric compressor have been greatly improved, which can meet the need of comfort of various users in different using environments. However, compared with the comfort, the performance of safety of the electric compressor, which is closely related to the life safety of users, has been stagnant.

The connection between the motor of the common electric compressor and the terminals of the inverter is that the terminals are in contact with the motor terminals through the motor sheath, and the sealing plug is used to seal the connection between the terminals and the motor sheath. The end of the motor sheath is not sealed and there is a gap between the plug and the motor sheath, which will cause the refrigerant to contact with the motor terminals or terminals. This will cause the attenuation of the insulation performance and affect the safety of use.

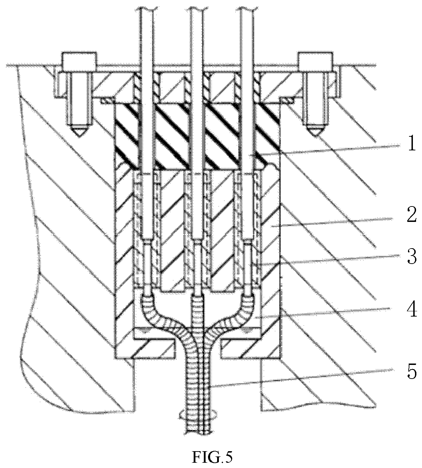

As shown in FIG.5, as an improvement, in the prior art, the terminals 1 and the three-phase lines 5 are connected in the space defined by the sheath 2. The pressure of the gas-phase refrigerant in this space and the pressure of the liquid-phase refrigerant flowing into this space will be balanced at the initial stage of the liquid-phase refrigerant flowing into this space. The opening space 4 is formed at the position where the pressure is low, and part of the conductive terminal 3 is prevented from contacting the liquid-phase refrigerant, thereby preventing a short circuit of the encapsulated electric compressor. However, as we all know, the compressor does not stand still during operation, and its vibration will inevitably lead to the refrigerant entering the opening space 4. Therefore, this improvement of isolating the conductive refrigerant through the pressure difference still has a relatively large risk of short circuit.

### SUMMARY

The purpose of the utility model is to provide a sealing structure of an electric compressor, an electric compressor and a vehicle, so as to solve the problem of attenuation of insulation performance caused by insufficient sealing performance of the motor and inverter.

In order to solve the above technical problems, the technical solution provided by the utility model is:

The utility model provides a sealing structure of an electric compressor, which comprises an upper sealing plug, lower sealing plugs and a motor sheath; the upper sealing plug is used for covering at least one section of the terminals; one end of the upper sealing plug is connected to the motor sheath; the lower sealing plugs are at least partially inserted into the motor sheath; the upper sealing plug, the lower sealing plugs and the motor sheath enclose accommodation spaces; motor terminals are arranged in the accommodation spaces and connected to the motor through the three-phase wires of the motor; the terminals are inserted into the motor terminals by passing through the upper sealing plug.

Further, the sealing structure of the electric compressor also includes a connecting plate, the terminals are installed on the connecting plate, and the other end of the upper sealing plug abuts against the corresponding surface of the connecting plate.

Further, the upper sealing plug is provided with post-through holes, and the terminals are electrically connected to the motor terminals through the post-through holes.

Further, the upper sealing plug has the same number of post-through holes as the number of motor terminals.

Further, threading holes are opened on the lower sealing plugs, and the three-phase wires of the motor are connected to the motor terminals by passing through the threading holes.

Further, the motor sheath is made of ductile material.

Further, the ductile material is Polyamide56.

Further, the upper sealing plug, the lower sealing plugs and the motor sheath are made of different materials.

Another aspect of this utility model is provided with an electric compressor, including the above-mentioned sealing structure of the electric compressor.

A third aspect of this utility model is provided with a vehicle, including the above-mentioned electric compressor.

Integrate the above-mentioned technical solutions, the technical effect of this utility model is:

The sealing structure of the electric compressor provided by this utility model comprises an upper sealing plug, lower sealing plugs and a motor sheath; the upper sealing plug is used for covering at least one section of the terminals; one end of the upper sealing plug is connected to the motor sheath; the lower sealing plugs are at least partially inserted into the motor sheath; the upper sealing plug, the lower sealing plugs and the motor sheath enclose accommodation spaces; the motor terminals are arranged in the accommodation spaces and are connected to the motor through the three-phase wires of the motor; the terminals are inserted into the motor terminals by passing through the upper sealing plug.

The utility model seals the connection between the terminals and the motor terminals through the accommodation spaces surrounded by the upper sealing plug, the lower sealing plugs and the motor sheath, so that the refrigerant cannot enter the accommodation space from the lower end of the motor sheath to connect with the terminals or the motor terminals, which prevent degradation of the insulation performance. At the same time, the upper sealing plug abuts against the upper end of the motor sheath, which eliminate the gap between the upper sealing plug and the motor sheath and prevent the refrigerant from overflowing from the accommodation space if the lower sealing plug is ineffective. This enhances the safety performance.

### BRIEF DESCRIPTION OF THE DRAWINGS

The embodiments or technical solutions in this utility model will be clearly and completely described below with reference to the accompanying drawings in the embodiments of this application. Obviously, the described drawings are part of the embodiments of the present application, not all of the embodiments. Based on the embodiments in the present application, all other embodiments obtained by ordinary technical personnel in this field without creative work fall within the protection scope of the present application.
FIG.1 is a cross-sectional view of the sealing structure of the electric compressor provided by the embodiment of the utility model;
FIG.2 is a schematic structural diagram of the motor sheath;
FIG. 3 is a schematic structural diagram of the upper sealing plug;
FIG.4 is a schematic structural diagram of the lower sealing plug;
FIG.5 is a schematic structural diagram of the connection of the terminal in the prior art.

Icons: 100-the upper sealing plug; 200-the lower sealing plugs; 300-the motor sheath; 400-the motor terminals; 500-the terminals; 600-the connecting plate; 700- the three-phase wires of the motor; 110- the post-through holes; 210-the threading holes; 310-the connecting holes; 1-the terminals; 2-the sheath; 3-the conductive terminal; 4-the opening space; 5-the three-phase lines.

### DETAILED DESCRIPTION

To make the purpose, technical solutions and advantages of the embodiments of the utility model clearer, the technical solutions in the embodiments of the utility model will be clearly and completely described below in conjunction with the accompanying drawings in the embodiments of the utility model. Obviously, the described embodiments are part of the embodiments of the present application, but not all embodiments. The components of the embodiments of the invention generally described and illustrated in the figures herein can be arranged and designed in a variety of different configurations.

Some embodiments of the present utility model will be described in detail with the drawings. In the case of no conflict, the following embodiments and features in the embodiments can be combined with each other.

The connection between the motor of the common electric compressor and the terminals of the inverter is that the terminals are in contact with the motor terminals through the motor sheath, and the sealing plug is used to seal the connection between the terminals and the motor sheath. The end of the motor sheath is not sealed. And there is a gap between the plug and the motor sheath, which will cause the refrigerant to contact with the motor terminals or terminals. This will cause the attenuation of the insulation performance and affect the safety of use.

In view of this, this utility model provides a sealing structure of an electric compressor, which comprises an upper sealing plug100, lower sealing plugs200 and a motor sheath300; the upper sealing plug100 is used for covering at least one part of the terminals500; one end of the upper sealing plug100 is connected to the motor sheath300; the lower sealing plugs200 are at least partly inserted into the motor sheath300; the upper sealing plug100, the lower sealing plugs200 and the motor sheath300 enclose accommodation spaces; the motor terminals400 are arranged in the accommodation spaces and are connected to the motor through the three-phase wires of the motor700; the terminals500 are inserted into the motor terminals400 by passing through the upper sealing plug100.

This utility model seals the connection between the terminals500 and the motor terminals400 through the accommodation spaces surrounded by the upper sealing plug100, the lower sealing plugs200 and the motor sheath300, so that the refrigerant cannot enter the accommodation spaces from the lower end of the motor sheath300 to connect to the terminals500 or the motor terminals400, which prevent degradation of the insulation performance. At the same time, the upper sealing plug100 abuts against the upper end of the motor sheath300, which eliminate the gap between the upper sealing plug100 and the motor sheath300, and prevent the refrigerant from overflowing from the accommodation spaces if the lower sealing plugs200 is ineffective. This enhances the safety performance.

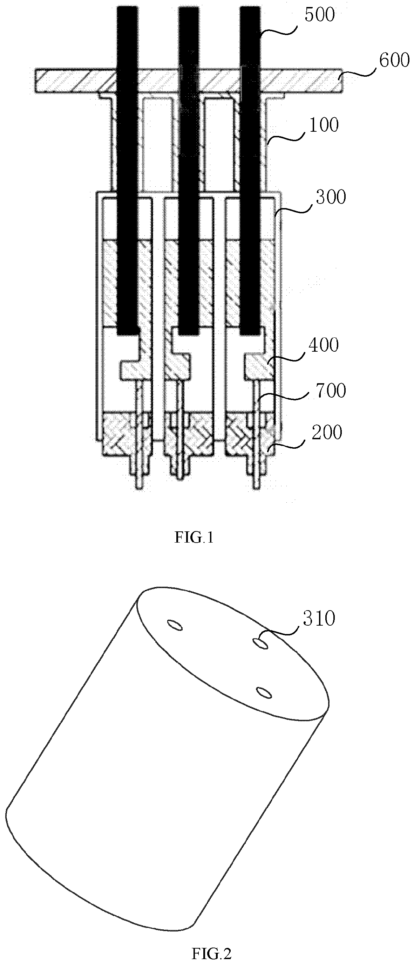

Illustrate with FIG.1-FIG.4, the structure and shape of the sealing structure of the electric compressor provided in this embodiment will be described in detail.

As shown in FIG.1, the optional solution of this embodiment, the sealing structure of the electric compressor can also comprise a connection plate 600, the terminals500 are installed on the connection plate 600, and the upper end of the upper sealing plug 100 abuts against the lower end of the connection plate 600. Specifically, three through holes are opened on the connection plate 600, the terminals 500 pass through the through holes, and the gap between the terminals 500 and the through holes are sintered with glass body to realize the connection and improve the insulation performance.

Further, the upper sealing plug 100 is provided with post-through holes 110, the terminals 500 pass through the post-through holes110, the diameter of the post-through holes 110 are not smaller than the diameter of the terminals 500. Usually, the diameter of the post-through holes 110 are slightly larger than that of the terminals 500 to facilitate the installation of the terminals 500. Appropriate interference fit can also be adopted to improve the sealing performance between the post-through holes 110 and the terminals 500.

In detail, the upper and lower ends of the upper sealing plug 100 are respectively abutted against the connection plate 600 and the motor sheath 300, so that the upper sealing plug 100 is fully fixed, and the two ends of the post-through holes 110 are connected by the lower end surface of the connection plate 600 and the upper end surface of the motor sheath 300, which form a sealed space, to prevent the refrigerant from overflowing from the gap between the post-through holes 110 and the terminals 500, causing attenuation of insulation performance.

Further, the height of the upper sealing plug 100 is greater than the distance between the connecting plate 600 and the motor sheath 300 to form a certain margin, which is used to compensate the shrinkage of the upper sealing plug 100 in the event of a harsh low temperature environment, so as to avoid the refrigerant leakage caused by the separation of the upper and lower ends of the upper sealing plug 100 from the connection plate 600 or the motor sheath 300 under extreme conditions, further improving safety.

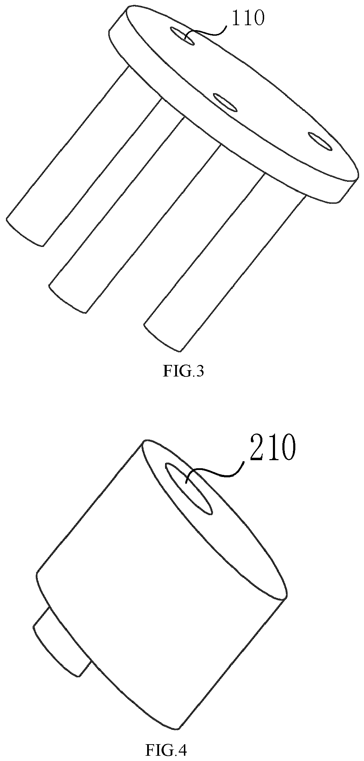

As shown in FIG. 3, in this embodiment, three post-through holes 110 are provided on the upper sealing plug 100 to correspond to the three terminals 500 to realize three-phase connection. Optionally, a post hole 110 is opened on the upper sealing plug 100, and each terminal 500 corresponds to one upper sealing plug 100, that is, one upper sealing plug 100 is divided into three independent parts, but in this case, the contact area between the upper sealing plug 100, the connection plate 600 and the motor sheath 300 is small, which is not conducive to the stability of the connection.

Obviously, the upper sealing plug 100 can also be made into a cylinder provided with three post-through holes 110. Compared with the upper sealing plug 100 shown in FIG.3, the contact area with the motor sheath 300 is larger, and the support is more stable. But compared with the structure shown in FIG.3 which three cylinders with post-through holes110 in every single cylinder are connected under a disc. When the distance between the connection plate 600 and the motor sheath 300 is less than the height of the upper sealing plug 100, its installation is more difficult, and the upper sealing plug 100 is not easily compressed during assembly.

Furthermore, the upper sealing plug 100 can be made of insulating material to further improve the safety performance.

As shown in FIG.2, in the optional solution of this embodiment, the motor sheath 300 is set as a hollow cylinder. Three independent chambers are arranged inside the motor sheath 300, and a motor terminal 400 is arranged in every chamber. Specifically, the upper end surface of the motor sheath 300 is provided with an upper connecting hole 310, and the upper connecting hole 310 connects with the cavity.

In an optional solution of this embodiment, the motor sheath 300 is made of ductile material, specifically Polyamide56 or Polytetrafluoroethylene. Due to the ductility of the material, when the lower sealing plug s200 are inserted into the motor sheath 300, the motor sheath 300 undergoes slight plastic deformation, that is, the motor sheath 300 and the lower sealing plugs 200 are in an interference fit. The sealing performance is improved while the assembly under the interference fit is completed, which prevent the refrigerant from entering the accommodation space from the gap between the lower sealing plugs 200 and the motor sheath 300.

In the optional solution of this embodiment, a threading hole 210 is opened on each of the lower sealing plugs 200 as shown in FIG.4. The three-phase wires of the motor 700 are connected to the motor terminals 400 passing through the threading holes 210. Every three-phase wire of the motor 700 is connected to a motor terminal 400 to complete three-phase wiring.

Further, the number of the lower sealing plugs 200 is three, that is, three lower sealing plugs 200 are respectively inserted into the lower end of the motor sheath 300 to form a closed accommodation space. Compared with the case that three independent lower sealing plugs 200 are made into a whole lower sealing plug 200, the independent lower sealing plug 200 is more convenient to be inserted into an independent chamber, and it is convenient for the three-phase wires of the motor 700 to pass through the threading holes 210, which is convenient for threading and assembly. Correspondingly, the lower end of the motor sheath 300 is provided with three plug holes, the diameter of the plug holes is slightly smaller than the outer diameter of the lower sealing plugs 200.

Specifically, the outer diameter of the lower sealing plugs 200 are slightly larger than the inner diameter of the plug holes, during assembly, the lower sealing plugs 200 increases the diameter of the plug holes and undergoes plastic deformation, which improves the connection strength and sealing performance. , the upper end of the lower sealing plugs 200 are provided with a chamfer or the upper end of the lower sealing plugs 200are tapered, so that the lower sealing plugs 200 can be inserted into the chamber easily.

In this embodiment, the diameter of the threading holes 210 are smaller than the diameter of the three-phase wires 700 of the motor to ensure the sealing effect.

Preferably, the lower sealing plugs 200 are made of insulating material to improve safety performance.

The sealing structure of the electric compressor provided in this embodiment seals the lower end of the motor sheath 300 through the lower sealing plugs 200 to prevent the refrigerant from contacting the terminals 500 or the motor terminals 400 and ensure the reliability of the insulation.

Further, the upper sealing plug 100, the lower sealing plugs 200 and the motor sheath 300 form the accommodation spaces, the upper end of the post holes 110are closed through the connecting plate 600, and the threading hole s210 are closed through the three-phase wires of the motor 700, so that the accommodation spaces form a completely closed space. One side of the connection of the motor terminals 400 and the terminals 500 with the motor terminals 400 are accommodated in the airtight accommodation space, which effectively protects the connection between the terminals 500 and the motor terminals 400 from refrigerant, and further improves safety.

To sum up, the upper sealing plug 100, the lower sealing plugs 200 and the motor sheath 300 form accommodation spaces with the upper and lower opening holes, specifically, the upper and lower opening holes of the accommodation space correspond to the post-through holes 110 and the threading holes 210 respectively. The three-phase wires of the motor 700 enter into the accommodation spaces from the threading holes 210 at the lower part of the accommodation spaces, and the terminals 500 enter into the accommodation spaces through the post-through holes 110 at the upper part of the accommodation spaces. The three-phase wires of the motor 700 and the terminals 500 are connected one by one through the motor terminals 400 arranged in the accommodation spaces connect to realize the three-phase connection of the electric compressor. Sealing of the accommodation spaces are achieved by sealing the openings with the connecting plate 600 and the three-phase wires of the motor 700, thereby forming two levels of protection.

Specifically, under normal circumstances, the lower sealing plugs 200 seal the refrigerant out of the accommodation space, preventing the refrigerant from contacting the motor terminals 400 and the terminals 500, causing the insulation performance to attenuate. At the same time, the interference fit of the lower sealing plugs 200 and the motor sheath 300 causes slight plastic deformation during assembly, which further improves the sealing performance, this is the first level of protection. When the lower sealing plugs 200are ineffective, the refrigerant enters into the accommodation spaces, connects with the terminals 500 and the motor terminals 400. So that the upper sealing plug 100 cooperates with the connecting plate 600 to realize sealing to prevent the refrigerant from overflowing from the accommodation space through the connecting holes 310 or the post-through holes 110, which affects the safety of use, that is the second level of protection.

In addition, through the extrusion of the upper sealing plug 100 by the connecting plate 600 and the motor sheath 300, the upper and lower ends of the upper sealing plug 100 are fully attached to the connecting plate 600 and the motor sheath 300 respectively to ensure the sealing, and because of the allowance of the upper sealing plug 100, the upper sealing plug 100 can still be in a state of being attached to the connection plate 600 and the motor sheath 300 when the upper sealing plug 100 shrinks due to harsh low-temperature environment, so as to ensure the sealing of the accommodation space.

Further, the upper sealing plug 100, the lower sealing plug s200 and the motor sheath 300 are made of insulating materials, which can further enhance the reliability of the insulation performance.

According to the embodiment of this application, an electric compressor is provided, comprising the above-mentioned sealing structure of the electric compressor, which is used for refrigeration.

According to an embodiment of the present invention, a vehicle is provided, comprising the above-mentioned electric compressor, so as to improve the safety of the vehicle.

Finally, it should be noted that: the above embodiments are only used to illustrate the technical solutions of the present utility model, and are not intended to limit it; although the present utility model has been described in detail with reference to the foregoing embodiments, those of ordinary skill in the art should understand : They can still modify the technical solutions described in the foregoing embodiments, or perform equivalent replacements to some or all of the technical features; and these modifications or replacements do not make the essence of the corresponding technical solutions depart from the embodiments of the present utility model.

## Claims

1. A sealing structure of an electric compressor,
comprising an upper sealing plug (100), lower sealing plugs (200) and a motor sheath (300);
the upper sealing plug (100) is used for covering at least one section of the terminals (500), and one end of the upper sealing plug (100) is connected to the motor sheath (300); the lower sealing plugs (200) are at least partially inserted into the motor sheath (300); The upper sealing plug (100), the lower sealing plug s(200) and the motor sheath (300) enclose accommodation spaces;
motor terminals (400) are arranged in the accommodation spaces, and are connected to the motor through the three-phase wires of the motor (700);
The terminals (500) are inserted into the motor terminals (400) by passing through the upper sealing plug (100).

2. The sealing structure of an electric compressor according to claim 1,
further comprising a connecting plate (600), wherein the terminals (500) are installed on the connecting plate (600) and the other end of the upper sealing plug (100) abuts against the corresponding surface of the connecting plate (600).

3. The sealing structure of an electric compressor according to claim 1 or 2,
the upper sealing plug (100) is provided with post-through holes (110), and the terminals (500) are electrically connected to the motor terminals (400) through the post-through holes (110).

4. The sealing structure of an electric compressor according to any of claims 1 to 3,
the upper sealing plug (100) is provided with the same number of the post-through holes (110) as the motor terminals (400).

5. The sealing structure of an electric compressor according to any of the preceding claims,
threading holes (210) are opened on the lower sealing plugs (200), and the three-phase wires of the motor (700) are connected to the motor terminals (400) by passing through the threading holes (210).

6. The sealing structure of an electric compressor according any of the preceding claims, the motor sheath (300) is made of ductile material.

7. The sealing structure of an electric compressor according to claim 6,
the ductile material is Polyamide56.

8. The sealing structure of an electric compressor according to any of the preceding claims,
the upper sealing plug (100), the lower sealing plugs (200) and the motor sheath (300) are made of different materials.

9. An electric compressor,
comprising the sealing structure of the electric compressor according to any one of claims 1 to 8.

10. A vehicle,
comprising the electric compressor according to claim 9.
